# EUROPEAN PATENT APPLICATION

(11) **EP 4 572 183 A1**
(43) Date of publication of application: **18.06.2025**
(21) Application number: 24218452.1
(22) Date of filing: 09.12.2024
(51) Int. Cl.: H04B 10/079, H04B 10/2537, H04J 14/02

(54) **RECONFIGURABLE OPTICAL ADD AND DROP MULTIPLEXER SYSTEM WITH MONITORING OF MISSING WAVELENGTH CHANNELS**

(30) Priority: 11.12.2023 US 202363608364 P
(71) Applicant: Molex, LLC, Lisle, IL 60532 (US)
(72) Inventor: Gong, Lifu, San Jose (US); Harel, Roey, Summit (US)
(74) Representative: Blumbach · Zinngrebe Patentanwälte PartG mbB

(57) **Abstract**

A reconfigurable optical add and drop multiplexer (ROADM) system is provided. The ROADM system may include at least one switching device configured to route optical signals through the ROADM system. Furthermore, each switching device may include a wavelength selective switch (WSS) configured to receive a plurality of input optical signals at a plurality of input ports and transmitting a first output optical signal. Moreover, each switching device may include a loading device optically coupled to the WSS, where the loading device is configured to receive the first output optical signal and a second signal, and the loading device is configured to transmit a second output optical signal based on the second signal and the first output optical signal received from the WSS.

## Description

The present disclosure relates to reconfigurable optical add and drop multiplexer (ROADM) systems, and in particular, but not limited to, reconfigurable optical add and drop multiplexer systems with fast monitoring of missing wavelength channels.

### BACKGROUND

A reconfigurable optical add-drop multiplexer (ROADM) system is a system that can add, block, pass, or redirect modulated infrared (IR) and visible light beams of various wavelengths in optical communication networks. Optical switches, e.g., wavelength selective switches (WSSs), are commonly used in a ROADM system to provide high-speed, high data rate communication capabilities. The optical communication networks often use optical wavelength division multiplexing to maximize the use of the optical spectrum. WSS assemblies permit optical signals to be selectively switched between optical receivers to carry out the desired communications functionality.

Wavelength-division multiplexing (WDM) technology has been widely used to increase the bandwidth of fiber networks with multiple signals in different wavelengths transmitted through a single-mode fiber, e.g., SSMF, ITU-TG.652. Traditional C band (1528 nm-1565 nm) bandwidth has been pushed to a limit of 4.8THz, with super C having an expanded bandwidth to 6THz to meet data capacity demands. Additionally, an L band (1570 nm-1610 nm) is commercially available now, which, with a super L band that may support 100 wavelengths with a target to support 6THz (120 wavelengths). This potentially broadens the total operating frequency spectrum to 12THz (Super C + Super L).

The foregoing background discussion is intended solely to aid the reader. It is not intended to limit the innovations described herein nor to limit or expand the prior art discussed. Thus, the foregoing discussion should not be taken to indicate that any particular element of a prior system is unsuitable for use with the innovations described herein, nor is it intended to indicate that any element is essential in implementing the innovations described herein.

### SUMMARY

The present disclosure provides examples of techniques relating to a ROADM system with fast monitoring of missing wavelength channels in signals.

According to a first aspect of the present disclosure, there is provided a ROADM system. The ROADM system may include at least one switching device configured to route optical signals through the ROADM system. Furthermore, each switching device may include a WSS configured to receive a plurality of input optical signals at a plurality of input ports and transmitting a first output optical signal. Moreover, each switching system may include a loading device optically coupled to the WSS. The loading device may be configured to receive the first output optical signal and a second signal, and the loading device may be configured to transmit a second output optical signal based on the second signal and the first output optical signal received from the WSS.

Each switching device is further comprised of a monitoring device that monitors the first output optical signal. The monitoring device may include a first optical tap coupler optically coupled to the WSS and configured to tap the first output optical signal. A tap photodiode detector (PD) may be optically coupled to the first optical tap coupler and configured to monitor the output optical signal for missing whole bands. An optical channel monitor (OCM) is optically coupled to the first optical tap coupler and configured to monitor the first output optical signal for missing one or more wavelength channels.

Each switching device may further include a monitoring device monitoring the first output optical signal. The monitoring device may include a first optical tap coupler optically coupled to the WSS and configured to tap the first output optical signal. An optical channel monitor (OCM) is optically coupled to the first optical tap coupler and configured to monitor missing one or more wavelength channels of the first output optical signal. The OCM monitors the presence of one or more wavelength channels.

The monitoring device may instead include a wavelength division multiplexer (WDM) optically coupled to the first optical tap coupler and configured to separate the C band and L band from the first output optical signal. A first PD may be optically coupled to a C band port of the WDM and be configured to monitor for the whole C band missing in the first output optical signal, and a second PD optically coupled to an L band port of the WDM and configured to monitor for the whole L band missing in the first output optical signal.

The OCM comprises a first optical wavelength blocker (WB) and a PD optically coupled to the first optical WB. The first optical WB receives the first output optical signal tapped by the first optical tap coupler and selectively transmits an output optical signal to the PD to monitor the first output optical signal for missing one or more wavelength channels. The first optical WB is a micro-electro-mechanical system (MEMS) based optical WB.

The loading device further comprises a 2x1 WSS. The 2x1 WSS receives an Amplified Spontaneous Emission (ASE) signal as a second signal at one input port and receives the first output optical signal from the WSS at another input port of the 2x1 WSS. The second signal is transmitted by the 2x1 WSS at one or more wavelength channels that are missing in the first output optical signal. The 2x1 WSS transmits the second output optical signal in full, complete channels with no duplication at an output port to an optical amplifier. The 2x1 WSS is a micro-electro-mechanical system (MEMS) based 2x1 WSS.

The loading device further comprises a second optical wavelength blocker (WB) configured to receive the second signal at an input port and selectively transmit the second signal at an output port and at one or more wavelength channels that are missing in the first output optical signal received at an output port of the WSS. A second optical tap coupler is configured to combine the second and first output optical signals to obtain the second output optical signal. The tap ratio of the second optical tap coupler at a path of the second optical WB is less than 50%. The second optical WB is a micro-electro-mechanical system (MEMS) based optical WB.

Each switching device further comprises an optical amplifier optically coupled to the loading device. The optical amplifier receives the second output optical signal and transmits a boosted second output optical signal as an output signal for the switching device.

According to a second aspect of the present disclosure, a method for monitoring optical signals to a ROADM system is provided. The method may include that a WSS receives a plurality of input optical signals at a plurality of input ports and transmits a first output optical signal, where the ROADM system may include at least one switching device, each switching device may include the WSS and a loading device, and the loading device is optically coupled to the WSS. Furthermore, the method may include the loading device receiving a second signal and transmitting a second output optical signal based on the second signal and the first output optical signal.

Each switching device further comprises a monitoring device configured to monitor the first output optical signal. The monitoring device includes a first optical tap coupler, a tap photodiode detector (PD), an optical channel monitor (OCM), a wavelength division multiplexer (WDM), a first PD for C band monitoring, and a second PD for L band monitoring. The tap PD, the OCM, and the WDM are optically coupled to the first optical tap coupler. The first PD for C band monitoring and the second PD for L band monitoring are optically coupled to the WDM's C band and L band ports.

The method further comprises tapping by the first optical tap coupler, the first output optical signal, monitoring by the tap PD, missing of whole bands of the first output optical signal, monitoring by the OCM of the first output optical signal for the missing of one or more wavelength channels by monitoring the presence of the one or more wavelength channels, separating, by the WDM, C band and L band from the first output optical signal, monitoring, by the first PD, missing of whole C band of the first output optical signal, and monitoring, by the second PD, missing of whole L band of the first output optical signal. The OCM may include a first optical wavelength blocker (WB) and a PD optically coupled to the first optical WB. The method further comprises receiving, by the first optical WB, the first output optical signal after tapping the first output optical signal by the first optical tap coupler; selectively transmitting, by the first optical WB, an output optical signal to the PD to monitor the missing of the one or more wavelength channels of the first output optical signal.

The loading device may comprise a 2x1 WSS. The method further includes receiving, by the 2x1 WSS, the second signal at one input port and the first output optical signal at another input port. The second signal is transmitted by the 2x1 WSS at one or more wavelength channels that are missing in the first output optical signal received at another input port of the 2x1 WSS. The method further comprises transmitting, by the 2x1 WSS, the second output optical signal at an output port to an optical amplifier.

The loading device may comprise a second optical wavelength blocker (WB) and a second optical tap coupler. The method further includes receiving, by the second optical WB, the second signal at an input port and selectively transmitting, by the second optical WB, the second signal at an output port and at one or more wavelength channels that are missing in the first output optical signal received at an output port of the WSS. The method further comprises obtaining, by the second optical tap coupler, the second output optical signal by combining the second and the first output optical signals.

Each switching device may further comprise an optical amplifier, which is optically coupled to the loading device. The method further includes receiving, by the optical amplifier, the second output optical signal and transmitting, by the optical amplifier, a boosted second output optical signal as an output signal of the switching device.

According to a third aspect of the present disclosure, a switching device is provided in a ROADM system. The switching device may include a WSS configured to receive a plurality of input optical signals at a plurality of input ports and transmit a first output optical signal and a loading device optically coupled to the WSS, where the loading device may be configured to receive the first output optical signal and a second signal and may be configured to transmit a second output optical signal based on the second signal and the first output optical signal received from the WSS.

According to a fourth aspect of the present disclosure, a monitoring and loading device in an ROADM system is provided. The monitoring and loading device may include one or more fast optical wavelength blocks (WBs) configured to add back a compensating optical signal to an input optical signal within a preset time frame of less than 50 milliseconds, where the compensating optical signal carries one or more wavelength channels that are missing in the input optical signal. One or more fast optical WBs are cascadedly arranged, and one or more fast optical WBs are configured to block wavelength channels other than the one or more wavelength channels that are missing in the input optical signal. The preset time frame may comprise 5 to 50 milliseconds.

One or more fast optical WBs may comprise a first optical WB and a second optical WB. The first optical WB and the second optical WB are cascadedly connected. The first optical WB receives, at an input port, a second optical signal carrying the full spectrum. The second optical WB transmits, at an output port, the compensating optical signal carrying one or more wavelength channels that are missing in the input optical signal.

The monitoring and loading may include a wavelength-selective switch (WSS) configured to transmit the input optical signal. The one or more wavelength channels are missing prior to entering the WSS. The monitoring and loading device may include a plurality of optical channel monitors (OCMs) configured to parallelly receive the input optical signal and monitor the one or more wavelength channels that are missing in the input optical signal. The plurality of OCMs is parallelly arranged, and each OCM processes a partial band of the full spectrum of the input optical signal. The plurality of OCMs comprises a first OCM, a second OCM, a third OCM, and a fourth OCM, wherein each of the first OCM, the second OCM, the third OCM, and the fourth OCM processes one-fourth band of the full spectrum of the input optical signal.

According to a fifth aspect of the present disclosure, there is provided a ROADM system. The ROADM system may include one or more fast optical WBs configured to add back a compensating optical signal to an input optical signal within a preset time frame of less than 50 milliseconds, where the compensating optical signal carries one or more wavelength channels that are missing in the input optical signal. The preset time frame may comprise 5 to 50 milliseconds.

One or more optical WBs are cascadedly arranged, and one or more optical WBs are configured to block wavelength channels other than the one or more wavelength channels that are missing in the input optical signal. One or more optical WBs comprise a first optical WB and a second optical WB. The first optical WB and the second optical WB are cascadedly connected. The first optical WB receives, at an input port, a second optical signal carrying full spectrum, and the second optical WB transmits, at an output port, the compensating optical signal carrying the one or more wavelength channels that are missing in the input optical signal.

The ROADM system further includes a wavelength selective switch (WSS) configured to transmit the input optical signal, wherein the one or more wavelength channels are missing prior to entering the WSS. The ROADM system may also comprise a plurality of optical channel monitors (OCMs) configured to parallelly receive the input optical signal and monitor the one or more wavelength channels that are missing in the input optical signal. The plurality of OCMs are parallelly arranged, and each OCM processes a partial band of the full spectrum of the input optical signal. The plurality of OCMs comprise a first OCM, a second OCM, a third OCM, and a fourth OCM. Each of the first OCM, the second OCM, the third OCM, and the fourth OCM processes one-fourth band of a full spectrum of the input optical signal.

According to a sixth aspect of the present disclosure, a method for monitoring optical signals to a ROADM system is provided. The method may include that one or more fast optical WBs may add a compensating optical signal to an input optical signal within a preset time frame of less than 50 milliseconds, where the compensating optical signal carries one or more wavelength channels that are missing in the input optical signal. The one or more fast optical WBs may be cascadedly arranged. The one or more fast optical WBs may be configured to block wavelength channels other than the one or more wavelength channels that are missing in the input optical signal. The preset time frame may comprise 5 to 50 milliseconds.

The one or more fast optical WBs comprise a first optical WB and a second optical WB. Cascadedly connecting the first optical WB and the second optical WB. Receiving, by the first optical WB at an input port, a second optical signal carrying full spectrum, and transmitting, by the second optical WB at an output port, the compensating optical signal carrying the one or more wavelength channels that are missing in the input optical signal.

### BRIEF DESCRIPTION OF THE DRAWINGS

FIG. 1 is a diagram illustrating a multiple degree ROADM node configuration in an optical fiber network.
FIG. 2 is a diagram illustrating using an extra port of a MUX WSS to selectively switch ASE signals.
FIG. 3 is a diagram illustrating an example of a ROADM system, including a fast ASE loading device and a signal monitoring device in accordance with some examples of the present disclosure.
FIG. 4 is a diagram illustrating another example of a ROADM system, including a fast ASE loading device and a signal monitoring device in accordance with some examples of the present disclosure.
FIG. 5 is a diagram illustrating an example of fast OCM in a ROADM system in accordance with some examples of the present disclosure.
FIG. 6 is a flow chart illustrating steps of monitoring optical signals to a ROADM system in accordance with some examples of the present disclosure.
FIG. 7 is a flow chart illustrating steps of monitoring optical signals to the ROADM system in accordance with some examples of the present disclosure.
FIG. 8A illustrates a fast ASE loading device and a signal monitoring device in accordance with some examples of the present disclosure.
FIGS. 8B-8D are diagrams illustrating examples of a ROADM system, including a fast ASE loading device and a signal monitoring device in accordance with some examples of the present disclosure.
FIG. 9 is a flow chart illustrating the steps of transmitting optical signals to a ROADM system in accordance with some examples of the present disclosure.
FIG. 10 is a flow chart illustrating the steps of monitoring optical signals to the ROADM system in accordance with some examples of the present disclosure.

### DETAILED DESCRIPTION

In the following description, for the purposes of explanation, numerous specific details are set forth in order to provide a thorough understanding of examples in the present disclosure. It will be apparent, however, that the examples may be practiced without these specific details. In other instances, well-known structures and devices are shown in block diagram form in order to avoid unnecessarily obscuring the examples.

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of examples do not represent all implementations consistent with the disclosure. Instead, they are merely examples of apparatuses and methods consistent with aspects related to the disclosure as recited in the appended claims.

The terminology used in the present disclosure is for the purpose of describing particular embodiments only and is not intended to limit the present disclosure. As used in the present disclosure and the appended claims, the singular forms "a," "an," and "the" are intended to include the plural forms as well, unless the context clearly indicates otherwise. It shall also be understood that the term "and/or" used herein is intended to signify and include any or all possible combinations of one or more items listed in the associated list.

It shall be understood that although the terms "first," "second," "third," etc. may be used herein to describe various information, the information should not be limited by these terms. These terms are only used to distinguish one category of information from another. For example, without departing from the scope of the present disclosure, the first information may be termed as second information, and similarly, the second information may also be termed as first information. As used herein, the term "if' may be understood to mean "when" or "upon" or "in response to a judgment," depending on the context.

### General Overview

Due to the stimulated Raman scattering (SRS) effect, WDM signals will experience an energy transfer from higher frequency channels to lower frequency channels, hence producing a tilt of the power spectrum of the WDM comb. It is more severe in Super C and much worse in the C+L system. Thus, WDM signal channels have to be carefully power balanced at each transmission node, however, the balance will be easily broken at a time signal add/drop, and there will be severe Signal to Noise Ratio (SNR) performance penalties to the existing channels. In order to mitigate, a pseudo signal, e.g., an Amplified Spontaneous Emission (ASE) source with similar spectrum power density at the same wavelength, is typically added into a system when the actual signal is not present. The pseudo signal will then be removed when the real signal is added back.

### Structural and Functional Overview

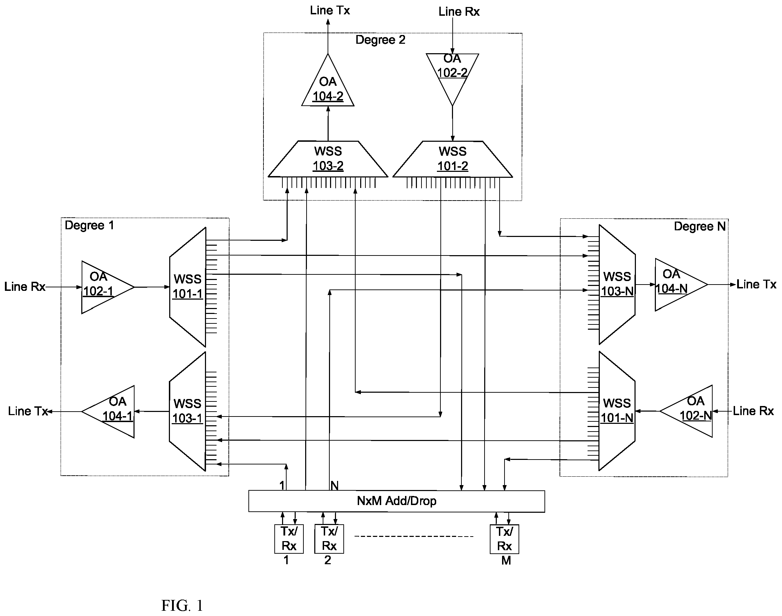

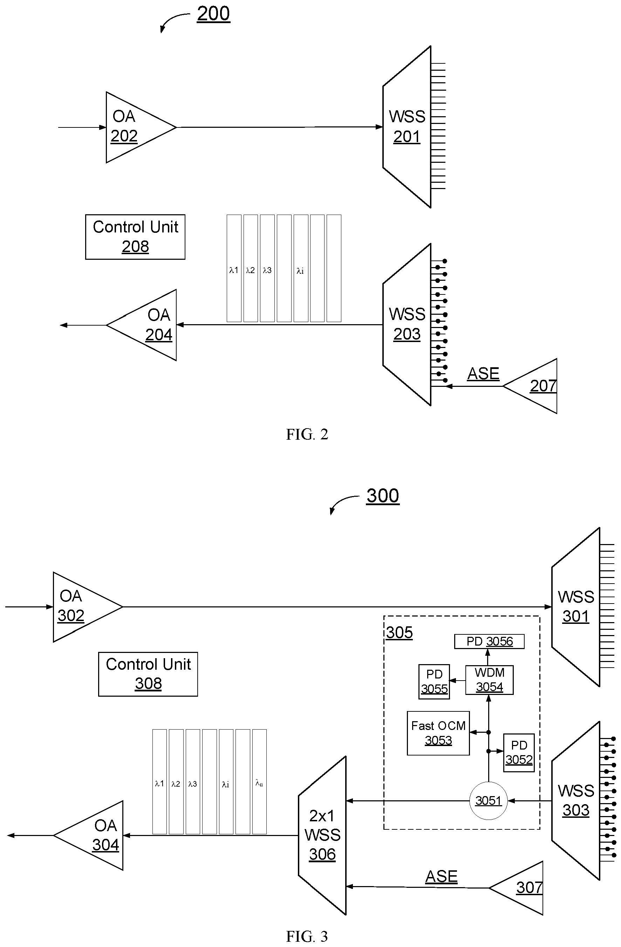

FIG. 1 is a diagram illustrating a multiple degree ROADM node configuration in an optical fiber network. As shown in FIG. 1, the optical fiber network includes N degree, i.e., Degree 1, Degree 2, ..., Degree N, where N may be a positive integer. Different degrees correspond to different network connection directions. In each degree, line Tx and line Rx interface with other network site node equipment for main service transportation along the fiber trunk. MUX and DeMUX WSSs provide any signal channel cross connection among degrees and local client service channel add/drop (colorless and directionless). Optical amplifiers (OAs) provide optical signal boosting launching to line Tx (Booster) and amplification of signal receiving from line Rx (PreAmp). NxM Add/Drop may be any Multicast Optical Switch (MCS), NxM WSS, or other equivalents. NxM Add/Drop provides contentionless or contention local client service add/drop. In some examples, a pair of MUX and DeMUX WSSs and OAs (Booster and PreAmp) may be under the same local control group. A local control unit 208, e.g., a microprocessor or FPGA, will provide a local logic control and communication with the Node network controller, as shown in FIG. 2.

As shown in FIG. 1, for example, in one Degree, line Rx receives an optical signal, e.g., an input optical signal, from other network site node equipment. After the optical signal is amplified by the OA, for example, in Degree 1, OA 102-1 amplifies the optical signal received by line Rx and sends the boosted optical signal to DeMUX WSS 101-1. The output signals of DeMUX WSS 101-1 may be multiple, one or more of which may be sent to one or more MUX WSSs of another degree. For example, as shown in FIG. 1, two of the output signals of DeMUX WSS 101-1 are respectively sent to MUX WSS 103-2 in Degree 2, MUX WSS 103-N in Degree N, and one of the output signals of DeMUX WSS 101-1 is dropped via NxM Add/Drop.

Furthermore, as shown in FIG. 1, MUX WSS 103-1 in Degree 1 receives signals from one or more other Degrees, e.g., Degree 2 and Degree N, and one or more signals added from NxM Add/Drop. The output signal of the MUX WSS 103-1 is sent to OA 104-1, and line Tx receives amplified signals from OA 104-1.

As shown in FIG. 1, each degree may have the same components and structure; that is, signals in other Degrees, such as Degree 2, ..., and Degree N, may operate similarly as discussed in Degree 1.

In order to fight the SRS performance impact when some wavelength channel signals are missing before lunching to a line transport fiber, an extra port of a MUX WSS may be used to selectively switch ASE channel signals to the line from the ASE light source, as shown in FIG. 2. In some examples, as shown in FIG. 2, the switching device 200 may include DeMUX WSS 201, OA 202, MUX WSS 203, ASE source 207, control unit 208, and OA 204. MUX WSS 203 may receive multiple input optical signals at multiple input ports, as shown as black dots, and generate an output optical signal.

However, such a setup has many significant drawbacks. For example, there will be no good isolation (e.g., 25dB) of MUX WSS on unwanted ASE channels, which may cause real signal performance Optical Signal-to-Noise Ratio (OSNR) degradation. On the other hand, WSS would be more expensive to achieve high isolation (e.g., 35dB) on the ASE loading port.

Furthermore, the switching on/off of ASE loading is a long process, typically at hundreds of milliseconds or seconds, while network signal traffic hit would only tolerate <100ms, preferably <50ms, and even more stringent for some real-time services. Specifically, WSS switching time is long at hundreds of milliseconds as high degree WSSs typically are LCoS based due to the stringent flex grid wavelength channel spectrum shape requirement, and its switching speed is very slow.

Additionally, detection of a missing service channel is slow, particularly at unexpected events, such as field fiber cut of Degree N, causing the signals from that direction to all to be lost (<1ms), or any of the local client signal transceiver sudden dead due to various reasons, e.g., power outage, etc. As a photodiode detector (PD) can only detect total signal power, not signal channel detail, Optical Channel Monitors (OCM) need to be deployed at the input ports of MUX WSS, tapping at black dots in FIG. 2. However, the OCM signal scanning takes a long time, for example, a hundred milliseconds or even entire seconds. It is also very costly if every input will be monitored by an individual OCM, and typically, a 1xN (N is the number of input ports) optical switch may be used to share one OCM, thus further slowing this detection/monitoring process.

A new ROADM Degree unit configuration with two options, as shown in FIGS. 3-4, to significantly shorten ASE loading process time by improving on switching mechanism and signal detection mechanism, as well as improving port isolation on ASE. FIG. 3 is a diagram illustrating an example of a ROADM system, including a fast ASE loading device and a signal monitoring device in accordance with some examples of the present disclosure.

### Fast ASE Loading

According to some examples of the present disclosure, as shown in FIG. 3, a separate MUX WSS, e.g., WSS 306, may be introduced to be located after the MUX WSS, e.g., MUX WSS 303. At its second add port, the separate MUX WSS 306 loads ASE. The separate MUX WSS may be, but is not limited to, a 2x1 MUX WSS, as shown in FIG. 3. FIG. 3 is a diagram illustrating an example of a ROADM system, including a fast ASE loading device and a signal monitoring device in accordance with some examples of the present disclosure. As shown in FIG. 3, a switching device 300 may be located at any degree of a reconfigurable ROADM system, as shown in FIG. 1.

In FIG. 3, ASE loading is decoupled from the MUX WSS 303. In FIG. 3, an additional 2x1 WSS 306 may be added. The 2x1 WSS 306 may be easily constructed to have a fast-switching speed (<100ms) by using a switching engine other than LCoS. The switching engine, for example, may be a MEMS or other technology. As it is only a 2 port add WSS, the performance on the main path (connecting with MUX WSS to OA) may be relatively easy to achieve with other WSS technology, unlike on a high degree port WSS. To achieve fast loading of optical light in lieu of missing traffic channels, the wavelength selective switching time of 2x1 WSS should be within 100ms at least, nominal 10ms, ideal at 1ms.

In some examples, as shown in FIG. 3, the switching device 300 may include DeMUX WSS 301, OA 302, MUX WSS 303, 2x1 WSS 306, ASE source 307, and OA 304. MUX WSS 303 may receive multiple input optical signals at multiple input ports, as shown as black dots, and generate an output optical signal. Prior to entering MUX WSS 303, one or more wavelength channels in an input optical signal may be missing.

In some examples, 2x1 WSS 306 together with ASE source 307 may be one example of a fast-loading device to implement fast ASE loading. As shown in FIG. 3, 2x1 WSS 306 receives the output optical signal from MUX WSS 303 at one input port. Additionally, 2x1 WSS 306 receives, at the other input port, a second signal, i.e., the pseudo signal ASE signal from ASE source 307, which is an alternative signal that is in place of one or more missing wavelength channels in the output optical signal received from MUX WSS 303, that is, the second signal is received by 2x1 WSS 306 at one or more wavelength channels that are missing. The 2x1 WSS 306 generates an output signal based on the second signal and the output optical signal of the MUX WSS 303.

Furthermore, the output signal of 2x1 WSS 306 that carries full complete wavelength channels λ₁, ..., λₙ without duplication is then sent to OA 304 at an output port of 2x1 WSS 306. After being amplified/boosted by OA 304, the output optical signal of 2x1 WSS 306 is sent via line Tx as an output of the Degree in which the switching device 300 is located. In some examples, 2x1 WSS 306 may be, but not limited to, a micro-electro-mechanical system (MEMS) based 2x1 WSS.

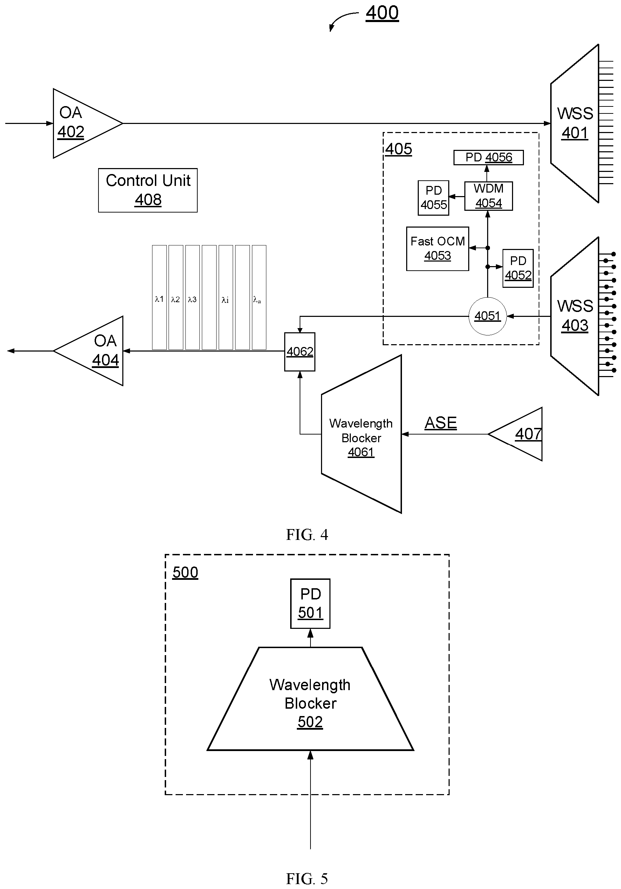

FIG. 4 illustrates another example of a fast ASE Loading device in accordance with the present disclosure. According to some examples of the present disclosure, as shown in FIG. 4, a 1x1 optical WB may be used to selectively pass ASE channels and an optical tap coupler 4062, which works as an optical power combiner, to combine them into a main optical path, and the tap ratio may be <50% to minimize the excess optical loss impact on the main path. With this structure, a fast speed (<100ms) blocking on/off WB may be easily constructed by using MEMS or other technology. Furthermore, the WB may be built with a simpler design to lower cost because the corresponding system only cares about the power level of the selected ASE channels, but there is no stringent channel spectrum requirement like a regular WSS. To achieve fast loading of optical light in lieu of missing traffic channels, the WB configuring time for transmitting selected channels should be within 100ms at least, nominal 10ms, ideal at 1ms.

As shown in FIG. 4, a switching device 400 may include DeMUX WSS 401, OA 402, MUX WSS 403, OA 304, and a fast ASE loading device, including a wavelength blocker 4061, an optical tap coupler 4062, and ASE source 407. MUX WSS 403 may receive multiple input optical signals at multiple input ports, as shown as black dots, and generate an output optical signal. The structure of MUX WSS 403 may be but is not limited to, in the same manner as MUX WSS 303. The optical tap coupler 4062 may receive the output signal of MUX WSS 403 at one input port.

Furthermore, the wavelength blocker 4061 may receive the second signal at its input port. The second signal may be the pseudo signal ASE signal from ASE source 407, which is an alternative signal that replaces one or more of the missing wavelength channels in the output optical signal of MUX WSS 403. The wavelength blocker 4061 may selectively transmit the second signal at an output port. The second signal is selectively transmitted by the wavelength blocker 4061 at one or more wavelength channels that are missing in the output optical signal of MUX WSS 403.

Moreover, after respectively receiving the second signal at one input port from the wavelength blocker 4061 and the output optical signal at another input port from the MUX WSS 403, the optical tap coupler 4062 may combine the second signal and the output optical signal that is received and generate an output optical signal to OA 404. The output optical signal generated by the optical tap coupler 4062 carries full, complete wavelength channels without duplication. After being amplified/boosted by OA 404, the output optical signal of the optical tap coupler 4062 is sent via line Tx as an output of the Degree in which the switching device 400 is located. In some examples, the wavelength blocker 4061 may be but is not limited to, a MEMS-based optical WB.

### Fast Detection or Monitoring of Missing Signal Channel to Kick in ASE Loading

In some examples, a fast-monitoring device may be introduced right after MUX WSS 303/403 by optical tapping signals with optical tap coupler 3051/4051.

In some examples, a fast-monitoring block may include a fast-speed OCM 3053/4053, Tap PD 3052/4052, C band/L band WDM 3054/4054, PD 3055/4055, PD 3056/4056, and their associated electrical circuits and control logic for fast detection signal processing.

In some examples, Tap PD 3052/4052 may be used to monitor an unplanned sudden drop of whole bands of signals from MUX WSS 303/403, which is the most severe case for other downstream ROADM node and line side signal transmission, and the detection time may be within 5ms or even shorter.

With C band/L band WDM 3054/4054, PD 3055/4055 may only sense C band signal power, and PD 3056/4056 may only sense L band signal power, respectively. These 2 PDs may be used to monitor if an unplanned sudden drop of the whole C band or whole L band of signals from Mux WSS 303/403, which is also a severe case for this ROADM node and its line side signal transmission as well as other downstream ROADM node and line side signal transmission, and the detection time may be within 5ms or even shorter.

In some examples, fast OCM 3053/4053 may be used to monitor if any unplanned sudden drop of certain wavelength channels out of the C band and L band of signals from MUX WSS 303/403, and the detection time may be within 50ms. As this fast OCM only needs to monitor whether a channel is present or not, rather than very detailed and accurate reporting of channel power and location in the wavelength spectrum, a very simple design may be needed, thus lowering cost.

FIG. 3 shows the fast-monitoring device 305 located between the MUX WSS 303 and the 2x1 WSS 306. The fast-monitoring device 305 may include the optical tap coupler 3051, which is optically coupled to the MUX WSS 303 and configured to tap the output optical signal of the MUX WSS 303. The fast-monitoring device 305 may include a PD 3052 that is optically coupled to the optical tap coupler 3051 and configured to monitor missing whole bands of the output optical signal of the MUX WSS 303. Further, the fast-monitoring device 305 may include a fast OCM 3053 monitoring the presence of one or more wavelength channels that are missing in the output optical signal of the MUX WSS 303. The fast OCM 3053 may be optically coupled to the optical tap coupler 3051 and configured to monitor the missing one or more wavelength channels of the output optical signal of the MUX WSS 303.

In some examples, the fast-monitoring device 305 may further include a WDM 3054 that is optically coupled to the optical tap coupler 3051 and configured to separate the C band and L band from the output optical signal tapped from the optical tap coupler 3051. Two PD 3055 and 3056 may be optically coupled to the WDM 3054. The PD 3055 may be optically coupled to a C band port of the WDM 3054 and configured to monitor for the missing of the entire C band of the output optical signal tapped from the optical tap coupler 3051. The PD 3056 may be optically coupled to an L band port of the WDM 3054 and configured to monitor for the missing of the entire L band of the output optical signal tapped from the optical tap coupler 3051.

FIG. 4 shows the fast-monitoring device 405 located between the MUX WSS 403 and the optical tap coupler 4062. The fast-monitoring device 405, in the same manner as the fast-monitoring device 305, may include the optical tap coupler 4051 that is optically coupled to the MUX WSS 403 and configured to tap the output optical signal of the MUX WSS 403. The fast-monitoring device 405 may include a PD 4052 that is optically coupled to the optical tap coupler 4051 and configured to monitor missing whole bands of the output optical signal of the MUX WSS 403. Further, the fast-monitoring device 405 may include a fast OCM 4053 monitoring the presence of one or more wavelength channels that are missing in the output optical signal of the MUX WSS 403. The fast OCM 4053 may be optically coupled to the optical tap coupler 4051 and configured to monitor for a missing one or more wavelength channels of the output optical signal of the MUX WSS 403. In some examples, the fast OCM 4053 may, but is not limited to, have a structure as shown in FIG. 5.

In some examples, the fast-monitoring device 405 may further include a WDM 4054 that is optically coupled to the optical tap coupler 4051 and configured to separate the C band and L band from the output optical signal tapped from the optical tap coupler 4051. Two PD 4055 and 4056 may be optically coupled to the WDM 4054. The PD 4055 may be optically coupled to a C band port of the WDM 4054 and configured to monitor for the missing of a whole C band of the output optical signal tapped from the optical tap coupler 4051. The PD 4056 may be optically coupled to an L band port of the WDM 4054 and configured to monitor for missing the whole L band of the output optical signal tapped from the optical tap coupler 4051.

In some examples, the fast OCM 3053 or 4053 may have a structure as shown in FIG. 5. FIG. 5 shows one example of such fast OCM, which may be built with the same Wavelength Blocker as described in FIG. 4. In FIG. 5, the fast OCM may include a PD and associated electrical circuits and processor. Following the structures shown in FIGS. 3-4, isolation on unwanted ASE channels will be much better than 35dB.

FIG. 5 is a diagram illustrating an example of fast OCM in a ROADM system in accordance with some examples of the present disclosure. The fast OCM 500 may include a PD 501 and a WB 502. The WB 502 may receive the output optical signal tapped by the optical tap coupler 3051/4051 and selectively transmits an output optical signal to the PD 501 to monitor missing of the one or more wavelength channels of the output optical signal of the MUX WSS 303/403. In some examples, the WB 502 may be but is not limited to, a MEMS-based optical WB. In some examples, to achieve fast monitoring, OCM response time should be within 100ms, nominal 30ms, and ideal 3ms.

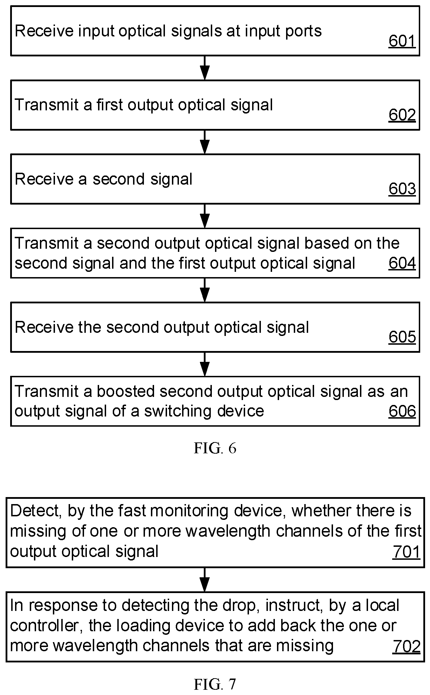

FIG. 6 is a flow chart illustrating the steps of monitoring optical signals to the ROADM system corresponding to FIGS. 3-4 in accordance with some examples of the present disclosure.

At step 601, a WSS may receive a plurality of input optical signals at a plurality of input ports.

At step 602, the WSS may transmit a first output optical signal.

In some examples, the first output optical signal may be the output optical signal of the MUX WSS 303 or the MUX WSS 403.

At step 603, the loading device may receive a second signal.

In some examples, as shown in FIGS. 3-4, the second signal may be the ASE signal from the ASE source 307 or 407, the loading device may be the loading device in FIG. 3, including the ASE source 307 and the 2x1 MUX WSS 306 or the loading device in FIG. 4, including the ASE source 407, the WB 4061, and the optical tap coupler 4062.

At step 604, the loading device may transmit a second output optical signal based on the second signal and the first output optical signal.

In some examples, the second output optical signal may be the output optical signal of the 2x1 WSS 306 in FIG. 3 or the output optical signal of the optical tap coupler 4062 in FIG. 4.

In some examples, an optical amplifier may, at step 605, receive the second output optical signal and, at step 606, transmit a boosted second output optical signal as an output signal of a switching device, as shown in FIGS. 3-4.

FIG. 7 is a flow chart illustrating the steps of monitoring optical signals to the ROADM system corresponding to FIGS. 3-4 in accordance with some examples of the present disclosure.

At step 701, the fast-monitoring device (305; 405) may monitor or detect whether there is missing one or more wavelength channels of the first output optical signal obtained in step 602.

In some examples, the first optical tap coupler (3051; 4051), which works as an optical splitter, may tap the first output optical signal; the tap PD (3052; 4052) may monitor the missing of whole bands of the first output optical signal; the OCM (3053; 4053) may monitor missing of one or more wavelength channels of the first output optical signal by monitoring the presence of the one or more wavelength channels; the WDM (3054; 4054) may separate C band and L band from the first output optical signal; a first PD (3055; 4055) may monitor missing of whole C band of the first output optical signal; and a second PD (3056; 4056) may monitor missing of whole L band of the first output optical signal.

At step 702, in response to detecting the missing, a local controller (control unit 308; 408) may instruct the fast-loading device to add back the one or more wavelength channels that are missing.

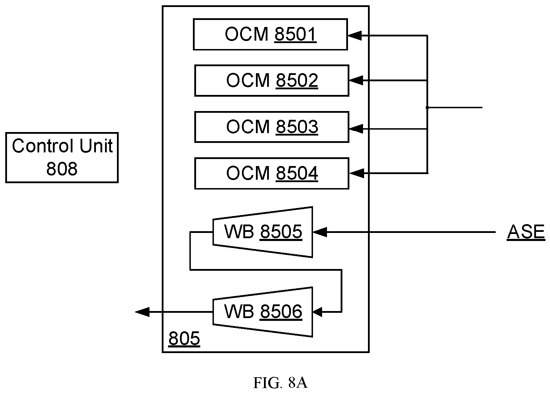

To achieve fast monitoring/detection and compensation of missing wavelength channels in the L and/or C band, the present disclosure provides a fast monitoring and loading device to monitor and compensate missing wavelength channels in the L and/or C band. For example, some wavelength channels are missing due to cut C-band fiber, which disturbs L-band signals. According to the present disclosure, the missing wavelength channels are not limited to a cut C-band fiber. FIGS. 8A-8D shows some examples of the fast monitoring and loading device, in which the duration of monitoring/detecting and compensating for the missing wavelength channels may be controlled to be in the range of less than 45 milliseconds. For example, the duration may be in the range of 2 to 50 milliseconds; more specifically, the duration may be in the range of 5 to 50 milliseconds; or the duration may be preset to be 10 milliseconds, 20 milliseconds, 35 milliseconds, or 50 milliseconds, or any other duration. The structure of the monitoring and loading device is not limited to FIGS. 8A-8D.

FIG. 8A illustrates a fast ASE loading device and a signal monitoring device 805 in accordance with some examples of the present disclosure. The fast ASE loading device and a signal monitoring device 805 may detect the loss of one or more wavelength channels in an input optical signal that is inputted. The fast ASE loading device may add back or compensate for one or more missing wavelength channels very fast, e.g., within a preset time frame, such as 5 to 50 milliseconds. For example, the fast ASE loading device may include one or more fast WBs that are capable of blocking certain channels (e.g., wavelength channels other than the one or more missing wavelength channels), pass other channels (e.g., the one or more missing wavelength channels) with certain pre-determined attenuation value and adding back the or more missing wavelength channels in a very short period of time, e.g., in the range of 5 to 50 milliseconds.

As shown in FIG. 8A, multiple OCMs (8501, 8502, 8503, 8504) may receive in parallel an input optical signal in which one or more wavelength channels are missing. For example, the missing wavelength channels may be caused due to, but not limited to, a cut C-band fiber with multiple channels.

As shown in FIG. 8A, the input optical signal may be split and then transmitted in parallel to the multiple OCMs that detect and monitor the presence of the missing wavelength channels.

Furthermore, one or more WBs in the fast monitoring and loading device 805 may be configured to compensate for the missing wavelength channels. A local controller, e.g., control unit 808, which may be located inside or outside of the fast monitoring and loading device 805, may instruct the one or more WBs to add back a compensating optical signal carrying the missing wavelength channels. The one or more WBs are fast WBs that are capable of quickly adding back the missing wavelength channels. For example, the one or more fast WBs may add back the missing wavelength channels within less than 50 milliseconds, such as, for example, within 5 to 50 milliseconds.

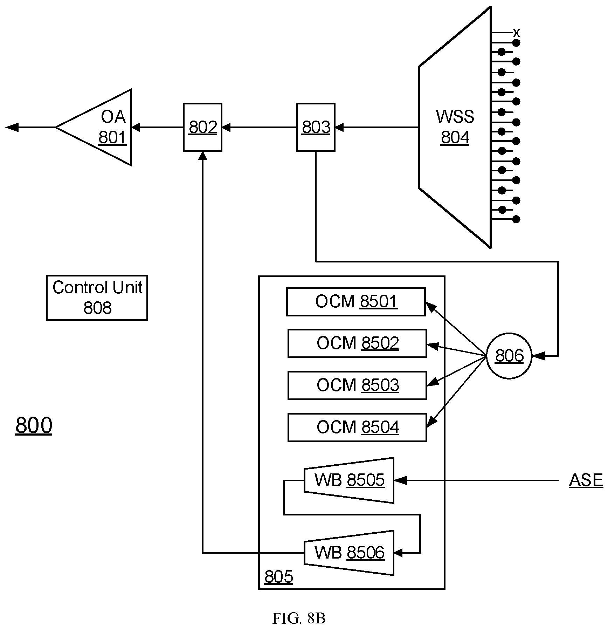

As shown in FIG. 8A, the one or more WBs may output a compensating optical signal, e.g., an ASE signal, carrying the missing wavelength channels to achieve compensation. For example, the WB 8505 may receive, at its input port, the ASE signal carrying a full spectrum that covers all wavelength channels. After the WB 8505's output signal is selectively transmitted to the cascadedly connected WB 8506, the WB 8506 may output the compensating optical signal carrying the missing wavelength channels that are detected by the multiple OCMs. The fast monitoring and loading device 805 may be applied to the ROADM system, as shown in FIGS. 8B-8D.

FIGS. 8B-8D are diagrams illustrating examples of a ROADM system, including a fast ASE loading device and a signal monitoring device in accordance with some examples of the present disclosure. As shown in FIGS. 8B-8D, a switching device 800 may be located in any Degree of a reconfigurable ROADM system, as shown in FIG. 1.

As shown in FIGS. 8B-8D, X indicates signals that are carried by multiple optical wavelength channels at that particular input port of MUX WSS 804 are missing. This loss of signal and its detailed wavelength channel information may be detected by a fast loading and monitoring device 805 through the Tap (optical Tap coupler 803).

The switching device 800 may include the MUX WSS 804 and the optical Tap coupler 803, an optical power splitter 806, the fast loading and monitoring device 805, and the optical Tap coupler 802.

As shown in FIGS. 8B-8D, the MUX WSS 804 may receive an input optical signal via line Rx in the Degree which the switching device 800 is located and transmit an output optical signal. One or more wavelength channels are missing in the input optical signal prior to entering the WSS.

The optical tap coupler 803, which works as an optical power splitter, may receive the output optical signal from the MUX WSS 804 and tap a signal from the output optical signal. The tapped signal is sent to the optical power splitter 806, which splits the tapped signal into a plurality of output optical signals. The plurality of output optical signals are then sent to the fast loading and monitoring device 805. The tapped signals sent to the optical power splitter 806 are the signals that are to be monitored and to be fed into the multiple OCMs (e.g., 4 OCMs) simultaneously, and data will be processed in parallel to get signal whole spectrum information at once, that is, each OCM only processes 1/4 band of full spectrum, thus speed may be 4x faster. The present disclosure uses optical power splitter 806 as one example of a device for splitting signals and feeding them into the fast loading and monitoring device 805. The present disclosure is not limited to using an optical power splitter to implement splitting the signals fed into the fast loading and monitoring device.

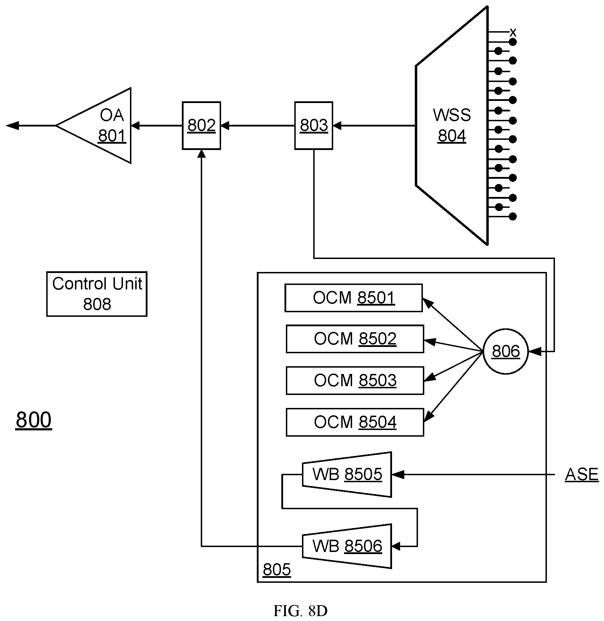

In some examples, the fast loading and monitoring device 805 may include a plurality of OCMs (8501, 8502, 8503, 8504) and one or more optical WBs (8505, 8506). The plurality of OCMs (8501, 8502, 8503, 8504) may be parallelly arranged, and each OCM receives one of the plurality of output optical signals from the optical power splitter 806. As shown in FIG. 8B, OCM 8501, OCM 8502, OCM 8503, and OCM 8504, respectively, receive an output optical signal from the optical power splitter 806. In some examples, the optical power splitter 806 may be located outside of the fast loading and monitoring device 805, as shown in FIG. 8B. In some other examples, the optical power splitter 806 may be located inside of the fast loading and monitoring device 805, as shown in FIG. 8D.

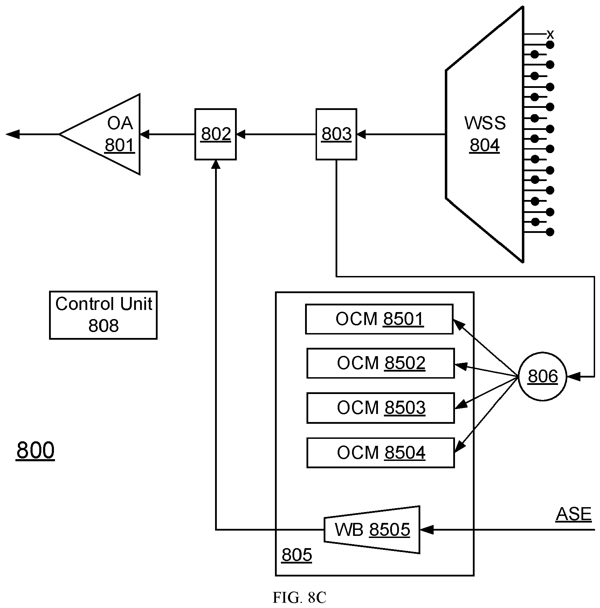

In some examples, the fast loading and monitoring device 805 may include one WB 8505, as shown in FIG. 8C. As illustrated in FIG. 8C, WB 8505 may receive a second signal, e.g., an ASE signal, that carries the full spectrum, which covers all wavelength channels in different bands. WB 8505 may selectively transmit the received ASE signal to the optical tap coupler 802.

In some other examples, the fast loading and monitoring device 805 may include a plurality of WBs, as shown in FIG. 8B. The plurality of optical WBs may be cascadedly arranged. As shown in FIG. 8B, WB 8505 may receive a second signal, e.g., an ASE signal, that carries the full spectrum, which covers all wavelength channels in different bands. WB 8505 may selectively transmit the received ASE signal to WB 8506. WB 8506 may then selectively transmit the received ASE signal carrying the one or more wavelength channels that are missing to the optical tap coupler 802. As shown in FIG. 8B, when ASE is not launched, the two cascadedly connected optical WBs, i.e., double pass through the Bernoulli to get a good extended range (ER).

FIG. 8B only illustrates four OCMs and two WBs for illustration purposes. The numbers of OCMs and WBs in the fast monitoring and loading device are not limited to the numbers shown in FIGS. 8A-8D. The number of the OCMs in FIGS. 8A-8D may be one or more, and the number of the WBs in FIGS. 8A-8D may be one or more as well.

According to this structure shown in FIG. 8B, WBs may only open up certain wavelength channels in the ASE spectrum from the ASE source to provide dummy signal channels to replace these real signal channels that were lost at the input port with X of the WSS 804 for overall signal path power balancing, and two WB cascading together may provide much high isolation on unwanted ASE noise. In configuring the fast monitoring and loading device, there is no need to support configured attenuation.

Further, in some examples, the optical tap coupler 802, which works as an optical power combiner, may combine the second signal and the first output optical signal to obtain an output optical signal and send it to OA 801. After being amplified/boosted by OA 801, the output optical signal of the optical tap coupler 802 is sent via line Tx as an output of the Degree in which the switching device 800 is located.

In some examples, un-block cannot be too fast in order not to destabilize the Erbium-Doped Fiber Amplifier (EDFA). Therefore, the fast monitoring and loading device in FIGS. 8A-8D may have multiple pre-defined unblock algorithms depending on the number of channels that were eliminated due to the broken fiber, i.e., the number of missing wavelength channels.

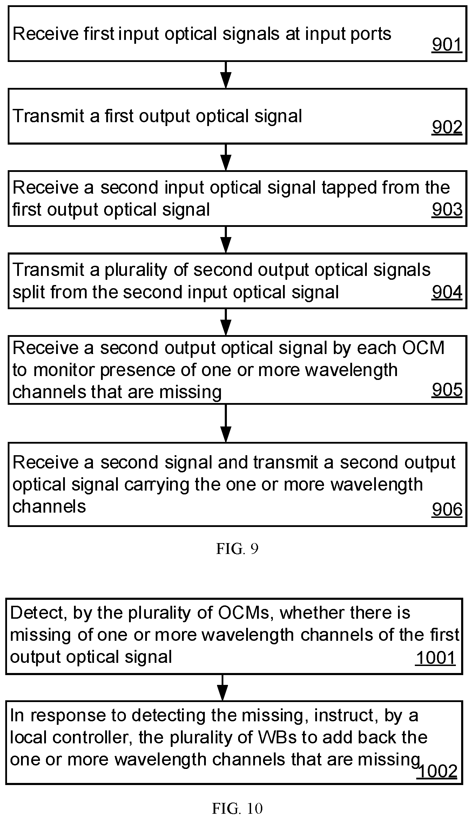

FIG. 9 is a flow chart illustrating the steps of transmitting optical signals in the switching device in FIG. 8B in accordance with some examples of the present disclosure.

At step 901, the MUX WSS 804 may receive a plurality of first input optical signals at a plurality of input ports in which one or more wavelength channels are missing at one or more of the plurality of input ports prior to entering the MUX WSS 804.

At step 902, the MUX WSS 804 may transmit a first output optical signal, which is the output optical signal of the MUX WSS 804 shown in FIG. 8B.

At step 903, the optical power splitter 806 may receive a second input optical signal that is tapped from the first output optical signal; that is, the optical power splitter 806 may receive the tapped optical signal from the optical tap coupler 803.

At step 904, the optical power splitter 806 may transmit a plurality of second output optical signals to a plurality of OCMs. The second output optical signals are signals that are split from the tapped signal that optical power splitter 806 receives.

At step 905, each OCM in the monitoring and loading device may receive an input optical signal, e.g., a second output optical signal from the optical power splitter to monitor the presence of one or more wavelength channels that are missing.

In some examples, each OCM may process a partial band of the full spectrum of the second input optical signal. For example, in FIG. 8B, each OCM processes 1/4 band of the full spectrum. The full spectrum may cover all wavelength channels in different bands.

At step 906, the plurality of optical WBs in the fast monitoring and loading device may receive an optical signal, e.g., an ASE signal, and selectively transmit a second output signal carrying one or more wavelength channels that are missing.

In some examples, the plurality of optical WBs may include a first optical WB 8505 and a second optical WB 8506. The first optical WB 8505 receives the second signal at its input port, carrying the full spectrum, and the second optical WB 8506 selectively transmits the second signal, which carries one or more wavelength channels that are missing.

FIG. 10 is a flow chart illustrating the steps of monitoring optical signals in the switching device, as shown in FIGS. 8A-8D in accordance with some examples of the present disclosure.

At step 1001, the plurality of OCMs in the fast monitoring and loading device may detect or monitor whether there is a missing one or more wavelength channels of an input optical signal, e.g., the first output optical signal, that is, the output optical signal of the MUX WSS 804.

At step 1002, in response to detecting the missing, a local control, e.g., control unit 808, may instruct one or more WBs to add back a compensating optical signal carrying the one or more wavelength channels that are missing.

In some examples, the one or more WBs may be configured to transmit an optical signal, e.g., an ASE signal, which carries the one or more wavelength channels that are missing in the input optical signal.

The description of the present disclosure has been presented for purposes of illustration and is not intended to be exhaustive or limited to the present disclosure. Many modifications, variations, and alternative implementations will be apparent to those of ordinary skill in the art having the benefit of the teachings presented in the foregoing descriptions and the associated drawings.

The examples were chosen and described in order to explain the principles of the disclosure and to enable others skilled in the art to understand the disclosure for various implementations and to best utilize the underlying principles and various implementations with various modifications as are suited to the particular use contemplated. Therefore, it is to be understood that the scope of the disclosure is not to be limited to the specific examples of the implementations disclosed and that modifications and other implementations are intended to be included within the scope of the present disclosure.

## Claims

1. A reconfigurable optical add and drop multiplexer (ROADM) system, comprising:
at least one switching device configured to route optical signals through the ROADM system, wherein each switching device comprises:
a wavelength selective switch (WSS) configured to receive a plurality of input optical signals at a plurality of input ports and transmitting a first output optical signal; and
a loading device optically coupled to the WSS, wherein the loading device is configured to receive the first output optical signal and a second signal, and the loading device is configured to transmit a second output optical signal based on the second signal and the first output optical signal received from the WSS.

2. The ROADM system of claim 1, wherein each switching device further comprises a monitoring device monitoring the first output optical signal, wherein the monitoring device comprises:
a first optical tap coupler optically coupled to the WSS and configured to tap the first output optical signal;
a tap photodiode detector (PD) optically coupled to the first optical tap coupler and configured to monitor missing of whole bands of the first output optical signal; and
an optical channel monitor (OCM) optically coupled to the first optical tap coupler and configured to monitor missing one or more wavelength channels of the first output optical signal.

3. The ROADM system of claim 2, wherein the monitoring device further comprises:
a wavelength division multiplexer (WDM) optically coupled to the first optical tap coupler and configured to separate C band and L band from the first output optical signal;
a first PD optically coupled to a C band port of WDM and configured to monitor missing of whole C band of the first output optical signal; and
a second PD optically coupled to an L band port of WDM and configured to monitor missing of whole L band of the first output optical signal.

4. The ROADM system of claim 2, wherein:
the OCM comprises a first optical wavelength blocker (WB) and a PD optically coupled to the first optical WB; and
the first optical WB receives the first output optical signal tapped by the first optical tap coupler and selectively transmits an output optical signal to the PD to monitor the missing of the one or more wavelength channels of the first output optical signal.

5. The ROADM system of claim 4, wherein the first optical WB is a fast optical WB and is configured to add back compensating optical signal to the input optical signal within a preset time frame of less than 50 milliseconds, wherein the compensating optical signal carries the one or more wavelength channels that are missing in the first output optical signal.

6. The ROADM system of claim 5, wherein the first optical WB is cascadedly arranged with additional optical WBs, and wherein the first optical WB and additional optical WBs are configured to block wavelength channels other than the one or more wavelength channels that are missing in the input optical signal.

7. The ROADM system of claim 4, wherein:
the OCM comprises a plurality of OCMs configured to parallelly receive the input optical signal and monitor the one or more wavelength channels that are missing in the input optical signal; and
the plurality of OCMs are parallelly arranged, and each OCM processes partial band of full spectrum of the input optical signal.

8. The ROADM system of claim 1, wherein:
the loading device further comprises a 2x1 WSS,
the 2x1 WSS receives an Amplified Spontaneous Emission (ASE) signal as a second signal at one input port and receives the first output optical signal from the WSS at another input port of the 2x1 WSS,
the second signal is transmitted by the 2x1 WSS at one or more wavelength channels that are missing in the first output optical signal; and
the 2x1 WSS transmits the second output optical signal in full complete channels with no duplication at an output port to an optical amplifier.

9. The ROADM system of claim 8, wherein the 2x1 WSS is a micro-electro-mechanical system (MEMS) based 2x1 WSS.

10. The ROADM system of claim 1, wherein the loading device further comprises:
a second optical wavelength blocker (WB) configured to receive the second signal at an input port and selectively transmit the second signal at an output port and at one or more wavelength channels that are missing in the first output optical signal received at an output port of the WSS; and
a second optical tap coupler configured to combine the second signal and the first output optical signal to obtain the second output optical signal.

11. The ROADM system of claim 10, wherein a tap ratio of the second optical tap coupler at a path of the second optical WB is less than 50%,
and/or
wherein the second optical WB is a micro-electro-mechanical system (MEMS) based optical WB.

12. The ROADM system of claim 1, wherein:
each switching device further comprises an optical amplifier optically coupled to the loading device; and
the optical amplifier receives the second output optical signal, and the optical amplifier transmits a boosted second output optical signal as an output signal of the switching device.

13. A reconfigurable optical add and drop multiplexer (ROADM) system, comprising:
a wavelength selective switch (WSS) configured to receive a plurality of input optical signals at a plurality of input ports and transmit a first output optical signal;
a first optical tap coupler that separates a tapped signal from the first output optical signal;
a fast loading and monitoring device that receives the tapped signal, monitors one or more wavelength channels that are missing in the tapped signal, and selectively transmits a compensating optical signal carrying the one or more wavelength channels that are missing in the tapped signal to a second optical tap coupler;
the second optical tap coupler that receives the compensating optical signal, combines the compensating optical signal with the first output optical signal to produce a second output signal; and
wherein the fast loading and monitoring device comprises a plurality of optical channel monitors (OCMs) that are parallelly arranged, and each of the plurality of OCMs processes a partial band of a full spectrum of the tapped optical signal.

14. The ROADM system of claim 13, wherein the fast loading and monitoring device further comprises one or more fast optical wavelength blocks (WBs) that are configured to:
receive a full spectrum Amplified Spontaneous Emission (ASE) signal;
produces the compensating optical signal; and
transmit the compensating optical to the optical tap coupler.

15. The ROADM system of claim 14, wherein:
the one or more fast optical WBs comprise a first optical WB and a second optical WB,
the first optical WB and the second optical WB are cascadedly connected, and
the first optical WB receives, at an input port, the full ASE signal and the second optical WB transmits, at an output port, the compensating optical signal carrying the one or more wavelength channels that are missing in the input optical signal.

16. The ROADM system of claim 13, further comprising: an optical power splitter configured to receive the tapped signal and separate the tapped signal into a plurality of the partial bands of the full spectrum of the tapped optical signal and provides each of the plurality of the partial bands to the plurality of OCMs,
and/or
wherein the plurality of OCMs comprise a first OCM, a second OCM, a third OCM, and a fourth OCM; and wherein each of the first OCM, the second OCM, the third OCM, and the fourth OCM processes one fourth band of the full spectrum of the input optical signal,
and/or
further comprising: an optical amplifier, and wherein the optical amplifier is configured to receive the second output signal from the second optical coupler, and transmit, by the optical amplifier, a boosted output optical signal.

17. A switching device in a reconfigurable optical add and drop multiplexer (ROADM) system, comprising:
a wavelength selective switch (WSS) configured to receive a plurality of input optical signals at a plurality of input ports and transmit a first output optical signal; and
a loading device optically coupled to the WSS, wherein the loading device is configured to receive the first output optical signal and a second signal and is configured to transmit a second output optical signal based on the second signal and the first output optical signal received from the WSS.
